# EUROPÄISCHE PATENTSCHRIFT

(11) **EP 2 837 450 B1**
(45) Veröffentlichungstag und Bekanntmachung des Hinweises auf die Patenterteilung: **20.03.2019**
(21) Anmeldenummer: 13180654.9
(22) Anmeldetag: 16.08.2013
(51) Int. Cl.: B23B 31/28, B23B 31/12

(54) **Spanneinrichtung**
Clamping device
Dispositif de serrage

(43) Veröffentlichungstag der Anmeldung: 18.02.2015
(73) Patentinhaber: SMW-AUTOBLOK Spannsysteme GmbH, 88074 Meckenbeuren (DE)
(72) Erfinder: Schilling, Rainer, 88069 Tettnang (DE); Rösner, Christian, 88074 Meckenbeuren (DE); Maurer, Eckhard, 88094 Oberteuringen (DE)
(74) Vertreter: Zech, Stefan Markus

(56) Entgegenhaltungen:
- EP-A1- 1 455 118
- EP-A1- 2 363 223
- DE-A1- 10 101 093
- RO-A2- 100 352

## Beschreibung

Die Erfindung betrifft eine Spanneinrichtung für Werkzeugmaschinen, insbesondere Dreh- oder Fräsmaschinen, die beispielsweise mit einem Kraftspannfutter zur Festlegung eines Werkzeugs oder Werkstücks versehen sind und dessen Spannbacken mittels der Spanneinrichtung über eine axial verstellbare, im Betrieb der Werkzeugmaschine mitumlaufende Zug- und/oder Druckstange betätigbar sind, nach den Merkmalen des Anspruchs 1.

Spanneinrichtungen für Werkzeugmaschinen, insbesondere Dreh- oder Fräsmaschinen, haben generell die Aufgabe, ein Werkzeug oder Werkstück sicher und gleichzeitig einfach handhabbar festzulegen. Insbesondere soll auch eine Nachstellkraft bereitgestellt werden, die einer axialen Verschiebung der Zug- und/oder Druckstange entgegen der Schließbewegung der Spannbacken entgegenwirkt, etwa um Fliehkräfte der Spannbacken auszugleichen. Eine derartige Spanneinrichtung kann manuell, pneumatisch, hydraulisch oder elektromotorisch betätigt werden.

Vorliegend soll eine elektromotorisch betätigte Spanneinrichtung vorgeschlagen werden, wobei elektromotorische Spanneinrichtungen in ihrem generellen Aufbau bereits aus dem Stand der Technik bekannt sind. Es wird hierzu beispielsweise auf die Druckschriften DE 33 14 629 C2, EP 2 384 839 B1, EP 2 311 589 B1, EP 2 548 681 A1 sowie EP 2 167 276 B1 verwiesen.

Die Druckschrift DE 101 01 093 A1 betrifft eine Spanneinrichtung für Werkzeuge mit einer Betätigungsstange 16, einer Abtriebsspindel 27, einem Antriebsmotor 23 und einer Kupplungseinrichtung 30.

Die Druckschrift RO 100 352 A2 betrifft eine elektromechanische Spannvorrichtung mit einer elektromagnetischen Kupplung.

Die Druckschrift EP 1 455 118 A1 betrifft eine Werkzeugspannvorrichtung mit einer Zugstange D, einem Verbindungsrohr 30 und Servomotoren 1 und 31.

Die Druckschrift EP 2 363 223 A1 betrifft eine Spanneinrichtung gemäß dem Oberbegriff des Anspruchs 1, mit einer Zugstange 6, einem elektrischen Servomotor 11 und einer elastischen Kupplung 19.

Gegenüber den vorstehend genannten Lösungen stellt sich die vorliegende Erfindung die Aufgabe, eine elektromotorisch betriebene Spanneinrichtung kompakter aufzubauen und insbesondere eine Spanneinrichtung mit einem Federkraftspeicher mit einer verbesserten Federcharakteristik bereitzustellen.

Diese Aufgabe wird mit einer Spanneinrichtung nach den Merkmalen des Anspruchs 1 gelöst. Vorteilhafte Weiterbildungen sind in den Unteransprüchen angegeben.

Nach der Erfindung wird insofern eine Spanneinrichtung für Werkzeugmaschinen, insbesondere Dreh- oder Fräsmaschinen, die mit einem Kraftspannfutter zur Festlegung eines Werkzeugs oder Werkstücks versehen sind, dessen Spannbacken mittels der Spanneinrichtung über eine axial verstellbare, im Betrieb der Werkzeugmaschine mitumlaufenden Zug- und/oder Druckstange betätigbar sind, vorgeschlagen, wobei die Spanneinrichtung Folgendes umfasst: eine axial verstellbare Zug- und/oder Druckstange, einen Elektromotor, über den die axiale Verstellung der Zug- und/oder Druckstange erfolgt, wobei der Elektromotor zur Zug- und/oder Druckstange koaxial angeordnet ist, jedoch im Betrieb der Werkzeugmaschine nicht mit der Zug- und/oder Druckstange umläuft, Getriebemittel, die mit der Zug- und/oder Druckstange mit umlaufen, und eine Kopplungseinrichtung , um den Elektromotor bedarfsweise drehmomentschlüssig mit den Getriebemitteln zu koppeln und damit eine Axialkraft auf die Zug- und/oder Druckstange aufzubringen, wobei die Spanneinrichtung einen Federkraftspeicher aufweist, der einer axialen Verschiebung der Zug- und/oder Druckstange entgegen der Schließbewegung der Spannbacken eine ausreichende Gegenkraft entgegensetzt, etwa um Fliehkräfte der Spannbacken und/oder Bearbeitungskräfte auszugleichen, wobei der Federkraftspeicher mehrere parallel zueinander wirksame Federelemente unterschiedlicher Bauart umfasst, nämlich eine vorbestimmte Anzahl von Spiralfedern sowie eine vorbestimmte Anzahl von Gasdruckfedern.

Klarstellend wird darauf hingewiesen, dass zwischen Elektromotor und Kopplungseinrichtung auch noch ein sich an den Elektromotor anschließendes abtriebsseitiges Vorgetriebe vorgesehen sein kann oder, wie es zur Reduktion von Bauteilen bevorzugt sein kann, der Elektromotor unmittelbar an die Kopplungseinrichtung angeschlossen sein kann.

Eine Kernüberlegung der vorliegenden Erfindung besteht darin, abweichend vom Stand der Technik den Elektromotor einerseits koaxial zu Zug- und/oder Druckstange anzuordnen, also derart, dass die zentrale Rotationsachse der durch Stator bzw. Rotor definierten Achse des Elektromotors mit der Achse der Zug- und/oder Druckstange zusammenfällt und andererseits nicht mit der Zug- und/oder Druckstange umlaufend vorzusehen. Vorzugsweise ist der Elektromotor dabei auch axial feststehend, insbesondere bezogen auf ein Außengehäuse oder bezogen auf einen Flansch zum Anschluss der Spanneinrichtung an eine Werkzeugmaschine, angeordnet.

Insbesondere kann sich die Zug- und/oder Druckstange durch den Elektromotor axial hindurcherstrecken, weiter insbesondere kann die Zug- und/oder Druckstange auch hohl ausgestaltet sein derart, dass bedarfsweise ein Werkstück in den freien Innenquerschnitt der Zug- und/oder Druckstange und somit mittelbar auch in die im Elektromotor vorgesehene axiale Ausnehmung eintauchen kann.

In einer weiter bevorzugten Ausgestaltung umfasst die Kopplungseinrichtung ein motorseitiges Teilelement sowie ein getriebeseitiges Teilelement, die von einer ersten entkoppelten Position in eine zweite gekoppelte Position und vice versa überführt werden können, wobei die Kopplungseinrichtung einen elektromechanischen Verstellantrieb umfasst.

Zwar ist es grundsätzlich möglich, einen Verstellantrieb hydraulisch oder pneumatisch zu betätigen; es wird jedoch als vorteilhaft angesehen, bei Realisierung eines elektromotorischen Antriebs zur axialen Verstellung der Zug- und/oder Druckstange auch die Kopplungseinrichtung elektromotorisch betätigen zu können. Eine Hydraulikversorgung bzw. eine Druckluftversorgung ist dann nicht mehr notwendig. Eine Ansteuerung und/oder Überwachung des Verstellantriebs ist einfach realisierbar, insbesondere auch über eine Erfassung und Auswertung der Antriebsströme des Verstellantriebs.

Im Sinne der Aufgabenstellung der vorliegenden Erfindung, die eine kompaktere Bauweise einer elektromotorischen Spanneinrichtung zum Ziel hat, kann es bevorzugtermaßen vorgesehen sein, dass der Verstellantrieb derart in die Spanneinrichtung integriert ist, dass er in radialer Richtung ausgehend von der durch die Zug- und/oder Druckstange definierten Achse A nicht über ein Elektromotor und Getriebemittel aufnehmendes Außengehäuse vorsteht bzw. übersteht. Die Spanneinrichtung lässt sich dann vergleichsweise einfach in Werkzeugmaschinen integrieren bzw. vergleichsweise einfach lagern, transportieren und ausliefern.

In einer konkreten, möglichen Ausgestaltung umfasst die Kopplungseinrichtung zwei miteinander in Eingriff bringbare Zahnräder, wobei ein antriebsseitiges Zahnrad Teil des motorseitigen Teilelements ist oder das motorseitige Teilelement bildet und wobei ein abtriebsseitiges Zahnrad Teil des getriebeseitigen Teilelements ist oder das getriebeseitige Teilelement bildet.

Hierbei können das antriebsseitige Zahnrad und/oder das abtriebsseitige Zahnrad koaxial zur Zug- und/oder Druckstange umlaufend gelagert sein.

Die Zahnpaarungen der Zahnräder können dabei seitlich oder stirnseitig ausgebildet sein.

Zur Übertragung des vom Elektromotor erzeugten Drehmoments und zur Umwandlung dieses Drehmoments in eine auf die Zug- und/oder Druckstange wirkende axiale Kraft kommen verschiedene denkbare Getriebemittel in Betracht. Bevorzugt wird der Einsatz eines Planetenrollengewindetriebs, wobei der Planetenrollengewindetrieb einen außenliegenden Innengewindekörper, einen innenliegenden Außengewindekörper, der mit der Zug- und/oder Druckstange fest verbunden oder einstückig mit ihr ausgebildet ist, sowie zwischen Außengewindekörper und Innengewindekörper angeordnete Rollkörper mit einer zylindrischen Grundform und einer auf die Gewinde von Innengewindekörper und Außengewindekörper abgestimmtem Außengewinde umfasst.

Obwohl prinzipiell auch ein Spindeltrieb denkbar wäre, um die Rotationsbewegung in eine axiale Verschiebebewegung bzw. eine Axialkraft umzusetzen, wird ein Planetenrollengewindetrieb bevorzugt, da die Reibungsverluste hier deutlich geringer sind und somit das vom Elektromotor erzeugte Drehmoment wesentlich wirkungsvoller in eine Axialkraft umgesetzt werden kann.

Der erfindungsgemäße Aufbau ermöglicht es in einer bevorzugten Weiterbildung, dass Elektromotor, Getriebemittel und Kopplungseinrichtung alle koaxial um die Zug- und/oder Druckstange jeweils nebeneinanderliegend angeordnet sind. Hierdurch wird ein besonders kompakter Aufbau erreicht mit der Folge, dass sich die erfindungsgemäße Spanneinrichtung sehr gut in unterschiedliche Werkzeugmaschinen integrieren lässt. Dabei wird es bevorzugt, wenn die Getriebemittel an der dem Kraftspannfutter zugewandten Seite bzw. der Elektromotor an der dem Kraftspannfutter abgewandten Seite und die Kopplungseinrichtung dazwischenliegend entlang der durch die Zug- und/oder Druckstange definierten Achse angeordnet sind, wobei rein prinzipiell auch eine umgekehrte Anordnung möglich, wenngleich weniger bevorzugt, erscheint.

In einer konkret bevorzugten Ausgestaltung, die auch unabhängig von der koaxialen Anordnung des Elektromotors zur Zug- und/oder Druckstange, also mit relativ zur Zug- und/oder Druckstange beliebig angeordnetem Elektromotor beansprucht wird, umfasst der elektromechanische Kopplungsantrieb zwei Elektromotoren, wobei über jeweils einen vom Elektromotor angetriebenen Exzenter ein motorseitiges Teilelement und ein getriebeseitiges Teilelement voneinander wegbewegt und/oder aneinander angenähert werden können. Mittels eines Exzenters lassen sich die vom Verstellantrieb erzeugten Drehmomente in besonders einfacher Weise in eine Verschiebebewegung zwischen motorseitigem Teilelement und getriebeseitigem Teilelement übertragen.

In einer bevorzugten Ausgestaltung wird eine zur Verstellbewegung des oder der Exzenter gegenläufige Bewegung durch ein oder mehrere Zugfedern bzw. ein oder mehrere Druckfedern bewirkt. Anstelle einer federbedingten Rückstellbewegung kann auch eine durch den Exzenter vorgegebene Zwangsführung vorgesehen werden, d.h. über die durch den Exzenter vorgegebene Zwangsführung kann nicht nur eine drückende, sondern auch eine rückstellende Kraft ausgeübt werden. Hierzu kann beispielsweise ein am Exzenter angeordneter Stift in eine entsprechende Kulissenführung am zu bewegenden Teilelement eingreifen. Alternativ kann der Exzenter selbst in ein Bauteil mit einer Öffnung eingreifen, die mit einer entsprechenden Exzenterkurve ausgestattet ist, um das geführte Bauteil in eine Richtung zu drücken bzw. rückzustellen.

In einer weiterhin möglichen Ausgestaltung können die Exzenter so ausgebildet bzw. angeordnet sein, dass sie über den oder die Elektromotoren in eine Übertotposition bringbar sind, so dass eine Selbstarretierung gegeben ist.

Es sei an dieser Stelle angemerkt, dass der elektromechanische Verstellantrieb der Kopplungseinrichtung ein, zwei oder mehr Elektromotoren aufweisen kann, wobei die ein, zwei oder mehr Exzenter jeweils durch einen einzigen, zugeordneten Elektromotor oder durch einen oder mehrere gemeinsame Elektromotoren angetrieben werden können. So ist es beispielsweise auch denkbar, zwei zueinander beabstandete Exzenter mit nur einem Elektromotor anzutreiben.

Der Federkraftspeicher umfasst mehrere parallel zueinander wirksame Federelemente unterschiedlicher Bauart. Unter Federelementen unterschiedlicher Bauart sind hier Federelemente zu verstehen, die auf unterschiedlichen physikalischen Wirkprinzipien beruhen, etwa einer mechanischen Rückstellkraft eines Festkörpers oder der Kompression eines Fluids. Konkret sind mehrere parallel zueinander wirksame Federelemente unterschiedlicher Bauart, nämlich eine bestimmte Anzahl von Spiralfedern sowie eine vorbestimmte Anzahl von Gasdruckfedern vorgesehen. Durch die Kombination mehrerer unterschiedlich wirksamer Federelemente, die parallel zueinander wirken, kann eine bei nur geringem Verstellweg ungünstige Federcharakteristik der Spiralfeder mit der Federcharakteristik einer Gasdruckfeder überlagert werden. Konkret wird durch diese Maßnahme erzielt, dass auch schon bei nur geringem Verfahrweg in den Federkraftspeicher schon eine erhebliche Gegenkraft aufgebaut wird. Die Federcharakteristika von Gasdruckfeder und Spiralfeder werden insofern gemäß diesem erfindungsgemäßen Konzept, das auch unabhängig von der konkreten Anordnung des Elektromotors relativ zur Zug- und/oder Druckstange beansprucht wird, miteinander kombiniert bzw. zueinander überlagert.

In einer vorteilhaften Weiterbildung können schließlich auch Sensoreinrichtungen vorgesehen sein, die den Federweg, also die aktuelle Kompression bzw. Dilatation im Federkraftspeicher erfassen, um daraus auf die jeweils gegebene Gegenkraft schließen zu können.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen
- Figur 1: eine Ausführungsform der erfindungsgemäßen Spanneinrichtung in perspektivischer Ansicht von außen.
- Figur 2: eine Frontansicht der Ausführungsform nach Figur 1.
- Figur 3: eine Schnittansicht entlang der Linien III-III in Figur 2.
- Figur 4: eine Teilschnittansicht entlang der Linie IV-IV in Figur 2.
- Figuren 4a und 4b: Ausschnitte aus Figur 4 zur Erläuterung der Wirkungsweise des elektromechanischen Verstellantriebs.
- Figuren 5a und 5b: in Figur 3 angedeutete Ausschnittsvergrößerungen zur Erläuterung der Wirkungsweise der Kopplungseinrichtung.
- Figur 6: ein Diagramm zur Erläuterung der überlagerten Federcharakteristika von Gasdruckfeder und Spiralfeder.
- Figur 7: eine Veranschaulichung einer Ausführungsform des steuerungstechnischen Aufbaus einer Spanneinrichtung nach der Erfindung.

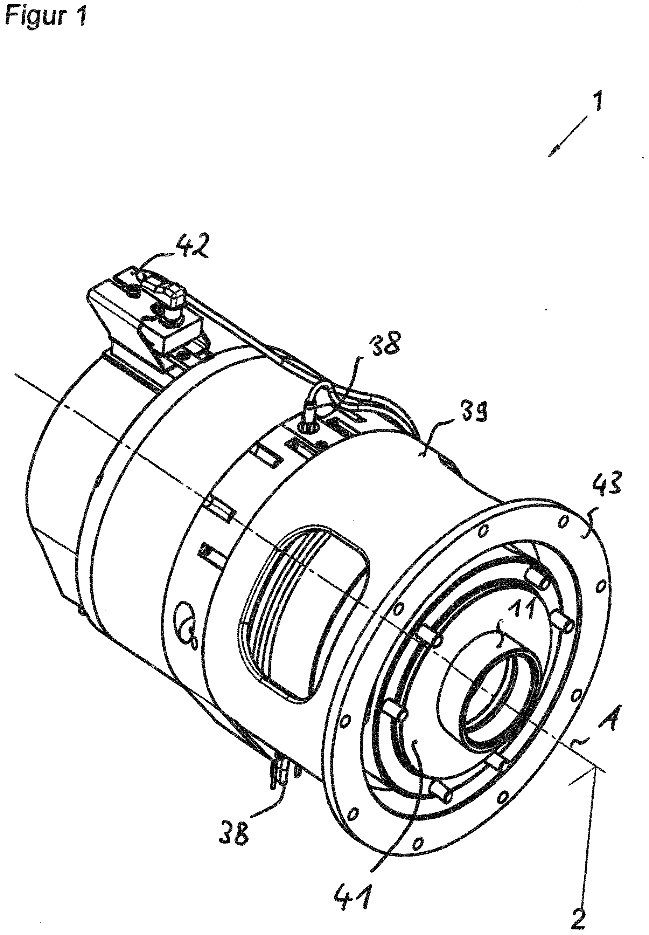

In Figur 1 ist eine Ausführungsform der erfindungsgemäßen Spanneinrichtung in perspektivischer Ansicht von außen dargestellt. Innerhalb eines Außengehäuses von zylindrischer Grundform 39 ist koaxial ein im Betrieb der Werkzeugmaschine mit umlaufender Spannzylinder 41 angeordnet, der eine zentrale Achse A definiert. Im Spannzylinder 41 aufgenommen ist eine axial verschiebbare Zug- und/oder Druckstange 11, über die ein Kraftspannfutter (nicht gezeigt) betätigt werden kann, wie an sich bekannt. Über das Außengehäuse 39 vorstehend sind noch Sensoreinrichtungen 38, 42 erkennbar, die Verstellwege erfassen, wie später noch eingehender erläutert. An der dem Spannfutter (nicht gezeigt) zugewandten Ende weist die Spanneinrichtung einen Flansch 43 zum Anschluss an die zugeordnete Werkzeugmaschine (nicht gezeigt) auf.

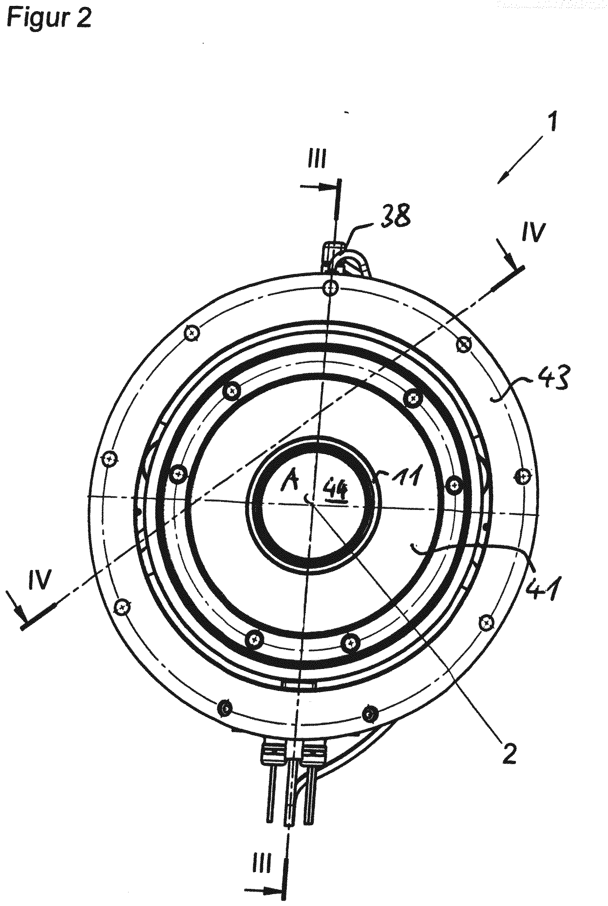

In Figur 2 ist die Spanneinrichtung nach Figur 1 in Frontansicht dargestellt. Zu erkennen ist, dass die Zug- und/oder Druckstange 11 rohrförmig ausgestaltet ist und einen lichten Innenquerschnitt 44 definiert, der das Eintauchen eines Werkstücks ermöglicht.

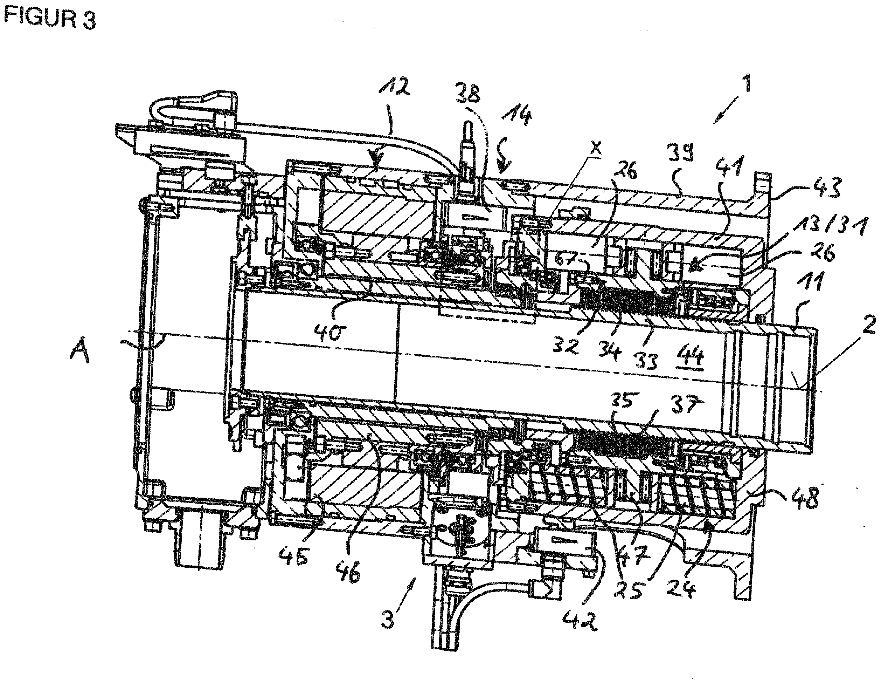

In Figur 3 ist eine Schnittansicht durch die Ausführungsform der Spanneinrichtung nach den Figuren 1 und 2 veranschaulicht. Entlang der zentralen Achse ist die rohrförmig ausgestaltete Zug- und/oder Druckstange 11, die einen lichten Innenquerschnitt 44 aufweist, gelagert. Die Spanneinrichtung ist bzw. lässt sich baulich axial entlang der Achse A in drei nebeneinander angeordnete Teilelemente untergliedern. Am distalen, einem Kraftspannfutter (nicht gezeigt) abgewandten Ende der Zug- und/oder Druckstange 11 ist koaxial zur Zug- und/oder Druckstange ein Elektromotor 12 angeordnet. An der dem Kraftspannfutter (nicht gezeigt) zugewandten Seite des Elektromotors 12 ist eine Kopplungseinrichtung 14 vorgesehen. An die Kopplungseinrichtung 14 schließt sich dann der Spannzylinder 41 an, der Getriebemittel 13 umfasst, um die vom Elektromotor 12 erzeugte Drehbewegung in eine Axialbewegung der Zug- und/oder Druckstange 11 umzusetzen. Im axialen Bereich weist der Elektromotor 12 eine parallel zur Achse A verlaufende Ausnehmung 40 auf. Die Zug- und/oder Druckstange durchdringt diese Ausnehmung 40 bei der vorliegenden Ausführungsform.

Der Elektromotor 12 weist einen Stator 45 sowie einen Rotor 46 auf, die beide koaxial um die Achse A bzw. die Zug- und/oder Druckstange 11 angeordnet sind. Bei dem Elektromotor handelt es sich vorzugsweise um einen Elektromotor mit einstellbarer Drehzahl, insbesondere um einen mit gesteuerter bzw. geregelter Drehzahl, weiter insbesondere um einen Torquemotor.

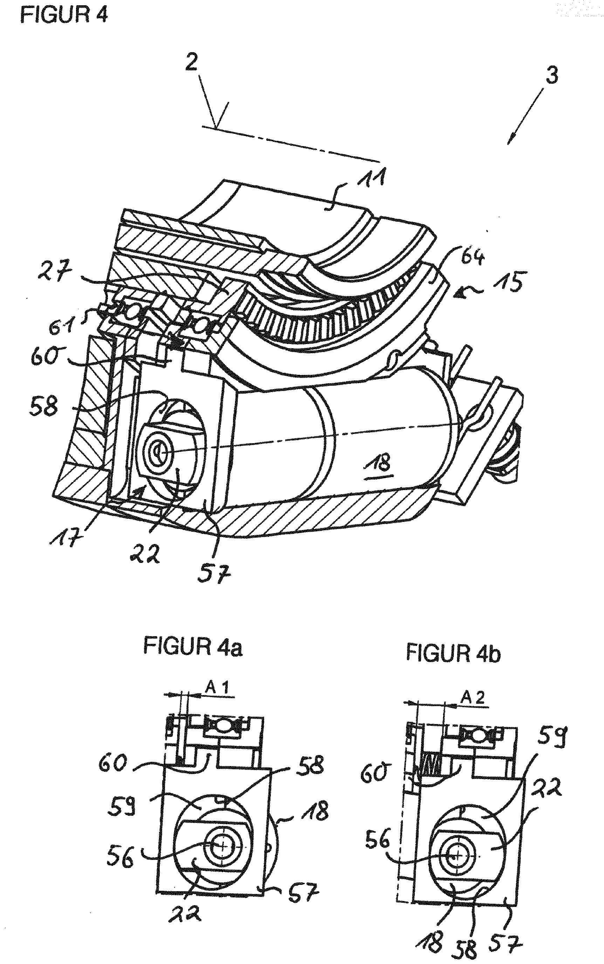

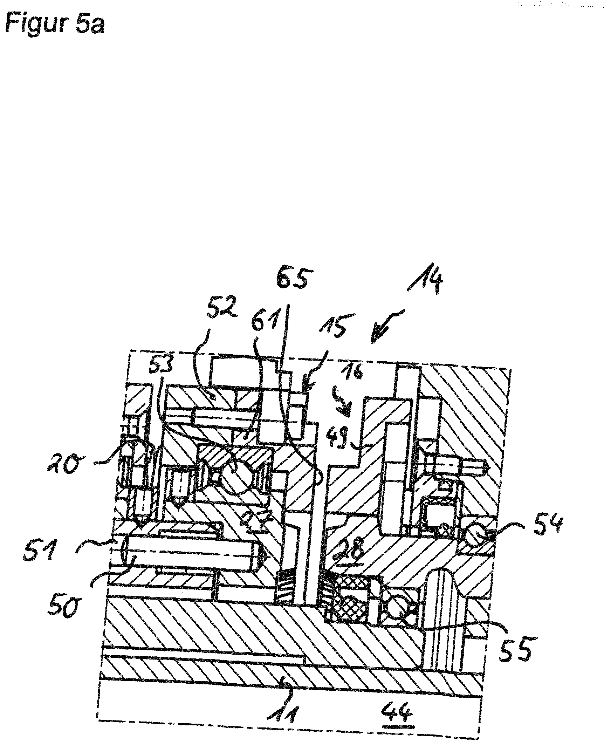

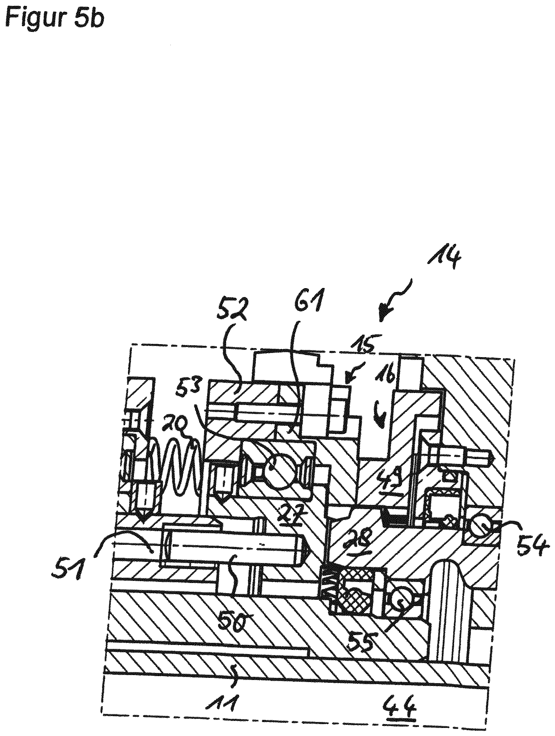

Über die bereits erwähnten, unter Bezugnahme auf die Figuren 4, 4a, 4b, 5a und 5b noch detaillierter erläuterte Kopplungseinrichtung 14 wird eine vom Elektromotor 12 erzeugte Drehbewegung im Bedarfsfall auf den Spannzylinder 41 übertragen, indem die Drehbewegung über Getriebemittel 13 in eine axiale Verstellung der Zug- und/oder Druckstange umgewandelt bzw. in eine Verfahrung eines Anschlags 47 innerhalb eines im Spannzylinder 41 untergebrachten Federkraftspeichers 24 umgewandelt wird. Die Getriebemittel 13 im Spannzylinder 41 umfassen bei der vorliegenden Ausführungsform einem Planetenrollengewindetrieb 31. Dieser Planetenrollengewindetrieb umfasst einen innenliegenden Außengewindekörper 33, der hier integral mit der Zug- und/oder Druckstange 11 ausgebildet ist und einen axial hierzu beweglichen außenliegenden Innengewindekörper 32, der drehmomentschlüssig mit einer im Zahnrad 28, das ein getriebeseitiges Teilelement 16 der Kopplungseinrichtung 14 bildet, verbunden ist.

Zwischen dem außenliegenden Innengewindekörper 32 und dem innenliegenden Außengewindekörper 33 sind mehrere Rollkörper 34, 35 angeordnet, die mit einem zum Innengewindekörper 32 bzw. Außengewindekörper 33 passenden Gewinde versehen sind. Wird somit der außenliegende Innengewindekörper 32 relativ zur Zug- und/oder Druckstange 11 verdreht, wird hierdurch eine axiale Verschiebung zwischen außenliegendem Innengewindekörper 32 und innenliegendem Außengewindekörper 33 also der Zug- und/oder der Druckstange erzeugt. Ist eine axiale Verschiebung der Zug- und/oder Druckstange gegenüber dem Flansch 43 der Spanneinrichtung nicht mehr möglich, weil ein Werkstück bereits fest im Kraftspannfutter gespannt ist, findet dennoch bei weiterer Rotation von (außenliegendem) Innengewindekörper 32 zu (innenliegendem) Außengewindekörper 33 eine axiale Verschiebung zwischen beiden statt. Allerdings bleibt dann die Zug- und/oder Druckstange 11 relativ zum Flansch 43 auf gleicher Axialposition und der (außenliegende) Innengewindekörper 32 bewegt sich mit seinem Anschlag 47 in einer zur Achse A parallelen Richtung in Richtung auf den Flansch 43 bzw. vom Flansch 43 weg.

Der bereits erwähnte Federkraftspeicher 24 weist eine Mehrzahl von sich am Innengehäuse 48 abstützenden Spiralfedern 25 und Gasdruckfedern 26 auf, wobei die Spiralfedern 25 und die Gasdruckfedern 26 jeweils mit einem ersten Ende einander zugewandt sind, aber der bereits erwähnte Anschlag 47 zwischen diesen beiden ersten Enden angeordnet ist. Mit den distalen zweiten Enden stützen sich die Spiralfedern 25 und Gasdruckfedern 26 jeweils am Innengehäuse 48 ab, derart, dass der Anschlag 47 nur gegen Aufbietung einer entsprechenden Kraft aus einer neutralen Grundstellung in die eine oder andere Richtung, jeweils unter Kompression der dann zugeordneten Spiralfeder 25 bzw. Gasdruckfeder 26 verschiebbar ist.

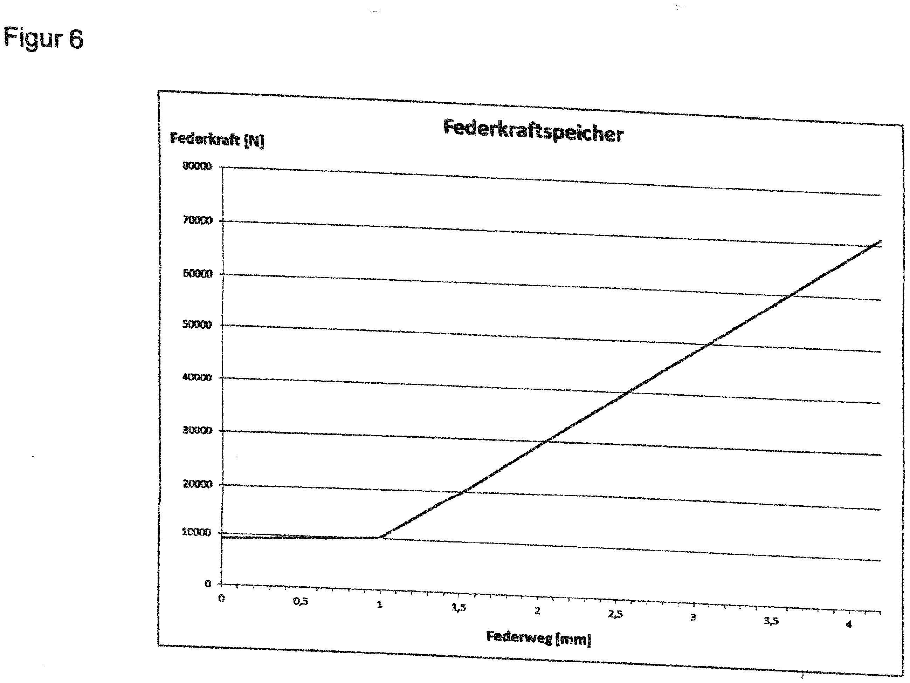

Da erfindungsgemäß die Spiralfedern 25 und Gasdruckfedern 26 parallel wirksam sind, überlagern sich die Charakteristika beider Federelemente unterschiedlicher Bauart. Ein Beispiel einer resultierenden Federcharakteristik ist in Figur 6 dargestellt. Während bekanntermaßen Spiralfedern eine annähernd lineare Federcharakteristik aufweisen, also bei anfänglicher Kompression die dadurch erzeugte Gegenkraft relativ gering ist, definieren Gasdruckfedern schon bei nur geringfügiger Kompression eine vergleichsweise hohe Gegenkraft. Überlagert man nun beide Federcharakteristika, so lässt sich eine schon bei geringfügigen Verstellwegen hohe Gegenkraft gewährleisten, wobei gleichzeitig bei größeren Verschiebewegen die Eigenschaft der Spiralfedern zum Tragen kommt, dass nämlich die Rückstellkraft linear ansteigt, also ein noch weiterer Verschiebeweg eine noch höhere Rückstellkraft erzeugt, so dass trotz der geringen zur Verfügung stehenden Verschiebewege ausreichende Gegenkräfte erzeugt werden können.

Nachstehend wird nun unter Bezugnahme auf die Figuren 4, 4a, 4b, 5a und 5b die Kopplungseinrichtung 14 zwischen Elektromotor 12 und Getriebemittel 13 näher erläutert. Die Kopplungseinrichtung weist dabei ein motorseitiges Teilelement 15 sowie ein getriebeseitiges Teilelement 16 auf. Bei der vorliegenden Ausführungsform ist das motorseitige Teilelement 15 axial verschieblich angeordnet, wohingegen das getriebeseitige Teilelement 16 bis auf ein verschiebliches Riegelelement 49 axial feststehend ausgebildet ist. Es sei aber bereits an dieser Stelle erwähnt, dass eine Kopplungseinrichtung 14 auch in der Weise denkbar ist, dass das motorseitige Teilelement 15 axial feststehend ausgebildet und angeordnet ist und sich das getriebeseitige Teilelement 16 verschieben lässt.

In der vorliegenden Ausgestaltung ist das motorseitige Teilelement 15 über Führungszapfen 50, die in entsprechende Führungsausnehmungen im Rotor 46 des Elektromotors 12 in den Rotor 46 eingreifen, gelagert. Das motorseitige Teilelement 15 umfasst bei der vorliegenden Ausführungsform ein Außenelement 52 sowie ein gegenüber dem Außenelement über ein Lager 53 drehbar gelagertes Zahnrad 27. Die bereits erwähnten Führungszapfen 50 greifen dabei in das drehbar gelagerte Zahnrad 27 ein und dienen insofern nicht nur als axiale Führung, sondern auch dazu, die Drehbewegung des Rotors 46 auf das im motorseitigen Teilelement drehbar gelagerte Zahnrad 27 zu übertragen.

Das getriebeseitige Teilelement 16 weist zunächst ein axial feststehendes, allerdings über Lager 54, 55 drehbar gelagertes Zahnrad 28 auf. Das Zahnrad 28 ist drehmomentschlüssig mit dem bereits erwähnten Innengewindekörper 32 verbunden, der über axial ausgerichtete Führungen 67 relativ zum Zahnrad 28 axial verschieblich gehalten ist.

Das getriebeseitige Teilelement 16 weist weiterhin ein Riegelelement 49 auf, das über eine Anschlagfläche 64 am motorseitigen Teilelement 15 in Richtung auf den Flansch 43 verschoben werden kann, um das Innengehäuse 48 drehmomentschlüssig mit dem Zahnrad 28 und insofern mit dem außenliegenden Innengewindekörper 32 zu verbinden. In einer entgegengesetzten Position, relativ zum Flansch 43 distalen Position ist hingegen Zahnrad 28 über das Lager 54 frei gegenüber dem Innengehäuse 48 beweglich, so dass ein Kräftegleichgewicht gehalten werden kann zwischen der vom Kraftspannfutter auf die Zug- und/oder Druckstange übertragenen Axialkraft und der vom Federkraftspeicher 24 bereitgestellten Gegenkraft.

Nachstehend wird unter Bezugnahme auf die Figuren 4, 4a und 4b ein elektromechanischer Verstellantrieb 17 erläutert, der eine Verschiebebewegung des motorseitigen Teilelements 15 bewirkt.

In der konkreten Ausgestaltung umfasst der elektromechanische Verstellantrieb zwei Elektromotoren mit jeweils einer austretenden Welle 56, wobei vorliegend nur ein Elektromotor 18 dargestellt ist. Auf der Welle 56 ist jeweils drehmomentschlüssig ein Exzenter 22 befestigt, der in eine Öffnung 59 einer Platte 57 eingreift, wobei die Öffnung 59 ein entsprechende Exzenterkurve 58 definiert. Die Elektromotoren 18 sind relativ zum Außengehäuse 39 feststehend angeordnet, wohingegen die Platten 57 Bestandteil des bereits erwähnten Außenelements 52 des verschieblich gelagerten motorseitigen Teilelements 15 sind. Selbstverständlich wäre es in einer kinematischen Umkehr auch denkbar, die Elektromotoren am verschieblich gelagerten motorseitigen Teilelement 15 anzuordnen und die Platten 57 mit Exzenterkurve 58 feststehend zum Außengehäuse 39 vorzusehen. Es wird allerdings die erstgenannte Variante, bei der die Elektromotoren 18 feststehend und die Platten 57 verschieblich angeordnet sind, bevorzugt. Die Öffnungen 59 in der Platte 57 definieren eine derartige Exzenterkurve, dass die Platten 57 relativ zum Außengehäuse 39 über den erforderlichen Verschiebeweg verschiebbar sind, um Zahnrad 27 und Zahnrad 28 miteinander in Eingriff bzw. außer Eingriff zu bringen. Die Platten 57 können einstückiger Bestandteil des bereits erwähnten Außenelements 52 sein. Sofern das Außenelement 52 mehrstückig, umfassend mindestens die Platte 57 sowie ein ggf. mehrteiliges Ringelement 61, aufgebaut ist, sind die Platten 57 in geeigneter Weise mit dem Ringelement 61 verbunden, beispielsweise dadurch, dass ein Mitnahmeabschnitt 60 in das Ringelement 61 eingreift.

Um das motorseitige Teilelement 15 in einer zum Elektromotor 12 hingezogenen Ruhestellung zu halten, können mehrere Maßnahmen alternativ oder kumulativ vorgesehen werden: Zunächst können entsprechende Zugfedern 20 vorgesehen sein, die ohne Betätigung der Elektromotoren 18 das motorseitige Teilelement 15 in der an den Elektromotor 12 angenäherten Ruheposition halten. Alternativ oder zusätzlich kann die Exzenterkurve 58 bzw. die Ansteuerung der Elektromotoren 18 so getroffen sein, dass der Exzenter 22 in der Stellung, in der das motorseitige Teilelement 15 in der an den Elektromotor 12 angenäherten Stellung (Ruhestellung) gehalten wird, eine Übertotposition einnimmt, so dass bei stromlosen Elektromotoren diese Position definiert beibehalten wird. Nur wenn die Elektromotoren entsprechend angesteuert werden, werden dann die Platten 57 in gewünschter Weise in Richtung auf den Flansch 43 verschoben, so dass das gesamte motorseitige Teilelement 15 vom Elektromotor 12 weg in Richtung auf die Getriebemittel 13 verschoben wird.

Um den Verschiebevorgang des motorseitigen Teilelements 15 zu überwachen, sind zweckmäßigerweise Sensoreinrichtungen 38 vorgesehen, die die jeweilige Position des motorseitigen Teilelements 15 erfassen, und zwar vorzugsweise nicht nur die jeweiligen Endlagen, sondern diskret oder kontinuierlich auch vom motorseitigen Teilelement 15 eingenommene Zwischenpositionen.

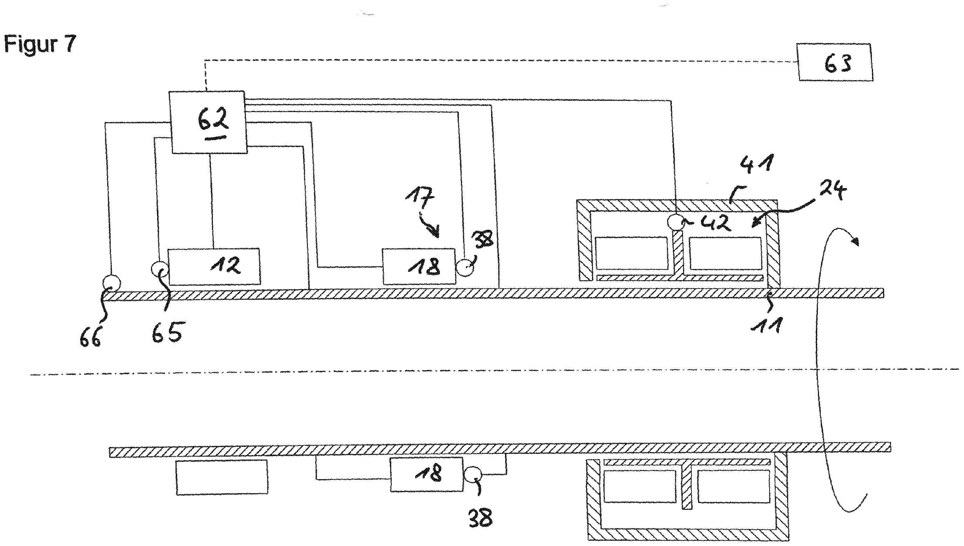

Unter Bezugnahme auf Figur 7, die eine Veranschaulichung einer Ausführungsform des steuerungstechnischen Aufbaus einer Spanneinrichtung nach der Erfindung zeigt, wird nachstehend ein Kopplungsvorgang zwischen Elektromotor und den im Spannzylinder 41 untergebrachten Getriebemitteln 13 näher erläutert. Unter einem Spannvorgang soll vorliegend sowohl das Einspannen eines Werkzeugs oder Werkstücks in ein Kraftspannfutter, also auch der gegenteilige Vorgang, nämlich das Lösen eines Werkstücks oder Werkzeugs aus einem Kraftspannfutter sowie die Erhöhung bzw. Verringerung der im Federkraftspeicher 24 bereitgestellten Kraft verstanden werden.

Eine Steuerungseinrichtung 62 steht dabei in Wirkverbindung mit den Sensoreinrichtungen 38 am elektromechanischen Verstellantrieb 17 sowie mit den Sensoreinrichtungen 42, die einen Verfahrweg im Federkraftspeicher 24 erfassen. Weiterhin steht die Steuerungseinrichtung 62 noch in Wirkverbindung mit einem Sensor 65, der die Umdrehungszahl des Elektromotors 12 oder Teilumdrehungen, insbesondere auch nur Veränderungen der Winkellage des Elektromotors 12 erfasst. Werden komplette Umdrehungen erfasst, kann der Sensor 65 beispielsweise als Hallsensor ausgebildet sein. Darüber hinaus steht die Steuerungseinrichtung 62 noch mit einem Sensor 66 in Wirkverbindung, der die Umdrehungen bzw. die Winkellage der Zug- und/oder Druckstange 11 erfasst. Es versteht sich von selbst, dass die von der Steuerungseinrichtung 62 über die Sensoreinrichtungen 38, 42 bzw. Sensoren 65, 66 erfassten Daten zumindest teilweise auch von einer externen Steuerung, beispielsweise einer Werkzeugmaschinensteuerung 63 bereitgestellt werden können. Eine derartige Werkzeugmaschinensteuerung 63 verfügt normalerweise über ausreichende Informationen, was die Drehgeschwindigkeit eines Werkzeugs oder Werkstücks anbelangt, die insofern der Drehgeschwindigkeit der Zug- und/oder Druckstange 11 entspricht. Die Werkzeugmaschinensteuerung 63 kann aber nicht nur an der Bereitstellung von Daten mitwirken, sondern auch hinsichtlich der eigentlichen Ansteuerung von Elektromotor 12 und/oder zur Ansteuerung des die Elektromotoren 18 umfassenden elektromechanischen Verstellantriebs 17 mit der Steuerungseinrichtung 62 zusammenwirken, insbesondere in der Ausgestaltung einer übergeordneten Steuerung.

Soll ein Spannvorgang vorgenommen werden, so wird das motorseitige Teilelement 15 in Richtung auf das getriebeseitige Teilelement 16 verfahren, wobei die bereits erwähnten Sensoreinrichtungen 38 die jeweilige Verschiebeposition des motorseitigen Teilelements 15 erfassen. Es können nunmehr zwei Fälle auftreten: Entweder die Zahnräder 27 und 28 sind bereits so zueinander ausgerichtet, dass sie bei ihrer Annäherung komplett ineinandergreifen; in diesem Fall detektieren die Sensoreinrichtungen 38, dass das motorseitige Teilelement 15 über die gesamte Verschiebestrecke verfahren wurde und insofern eine Kopplung zwischen Elektromotor 12 und den im Spannzylinder 41 angeordneten Getriebemitteln 13 vorliegt und das motorseitige Teilelement 15 somit in Kopplungsposition gelangt ist. Sofern aber die Sensoreinrichtungen 38 detektieren, dass das motorseitige Teilelement 15 nicht komplett verfahren werden konnte, da die Zähne der Zahnräder 27, 28 unmittelbar aufeinanderstehen, so veranlasst die Steuerungseinrichtung 62, dass ggf. unter geringfügigem Zurückbewegen des motorseitigen Teilelements 15 der Elektromotor 12 kurz angesteuert wird, um ein Verdrehen des Rotors 46 und damit des antriebsseitigen Zahnrads 27 zu bewirken. Anschließend wird der Vorgang des Annäherns erneut durchgeführt und vermittels der Sensoreinrichtungen 38 überprüft, ob das motorseitige Teilelement 15 nunmehr in seine Endstellung (Kopplungsposition) gelangt ist, also ein Eingriff zwischen dem Zahnrad 27 und dem Zahnrad 28 realisiert ist. Anschließend wird der Elektromotor 12 mit der jeweils benötigten Drehrichtung betätigt, um durch axiale Verschiebung der Zug- und/oder Druckstange 11 ein Werkzeug oder Werkstück aus dem Kraftspannfutter zu lösen bzw. im Kraftspannfutter einzuspannen.

Es versteht sich von selbst, dass sich über eine derartige Betätigung des Elektromotors 12 im eingekoppelten Zustand auch eine Veränderung der im Federkraftspeicher 24 erzeugten Gegenkraft erreicht werden kann, etwa zur Erhöhung der bereitgestellten Gegenkraft die parallel zueinander angeordneten Spiralfedern 25 und Gasdruckfedern 26 weiter komprimiert werden können bzw. zur Verringerung der bereitgehaltenen Gegenkraft die parallel angeordneten Spiralfedern 25 und Gasdruckfedern 26 auch entlastet werden können.

Der erfindungsgemäße Aufbau einer Spanneinrichtung ermöglicht es auch, derartige Erhöhungen oder Reduzierungen der im Federkraftspeicher 24 vorgehaltenen Gegenkraft während des Betriebs der Werkzeugmaschinen, d.h. bei umlaufender Zug- und/oder Druckstange 11 vorzunehmen. In diesem Fall wird der Elektromotor 12 im ausgekoppelten Zustand - das motorseitige Teilelement 15 befindet sich in der an den Elektromotor 12 angenäherten Ruhestellung - durch die Steuerungseinrichtung 62 auf die gleiche Umdrehungszahl gebracht, wie die Zug- und/oder Druckstange 11. Hierfür erfassen Sensoren 66 die Umdrehungszahl der Zug- und/oder Druckstange 11. Die Steuerungseinrichtung 62 steuert den Elektromotor 12 nun so an, dass dieser mit der gleichen Umdrehungszahl wie die Zug- und/oder Druckstange 11 umläuft. Ggf. wird die tatsächliche Umdrehungszahl des Elektromotors noch durch einen Sensor 65 überwacht. Stimmen Umdrehungszahlen der Zug- und/oder Druckstange 11 mit der Umdrehungszahl des Elektromotors 12 überein, kann der eigentliche Kopplungsvorgang durchgeführt werden.

Es wird dann das motorseitige Teilelement 15 in Richtung auf die im Spannzylinder 41 angeordneten Getriebemittel 13, also in Richtung auf das Zahnrad 28, verschoben. Dabei wird die Verschiebebewegung auch hier durch die Sensoreinrichtungen 38 überwacht. Stellen die Sensoreinrichtungen 38 fest, dass das motorseitige Teilelement 15 in die vorgesehene Kopplungsposition gelangt ist, so wird unter vorbestimmter Erhöhung bzw. vorbestimmter Verringerung der Drehzahl des Elektromotors 12 gegenüber der Zug- und/oder Druckstange 11 eine Erhöhung bzw. Verringerung der vom Federkraftspeicher 24 bereitgestellten Gegenkraft vorgenommen. Hierbei kann aus Bildung der Differenz der Umdrehungszahlen von Zug- und/oder Druckstange 11 und Elektromotor 12 auf den Umlauf des außenliegenden Innengewindekörpers 32 um den innenliegenden Außengewindekörper 33, also auf den Verschiebeweg im Federkraftspeicher 24 geschlossen werden. Alternativ, bevorzugtermaßen zusätzlich wird auch der Verschiebeweg im Federkraftspeicher 24 durch eine Sensoreinrichtung 42 überwacht. Sobald eine gewünschte neue Gegenkraft eingestellt ist, wird das motorseitige Teilelement 15 in die Ruhestellung zurückgefahren mit der Folge, dass ein neues Gleichgewicht zwischen der auf die Zug- und/oder Druckstange 11 wirkenden Kraft und der vom Federkraftspeicher 24 erzeugten Gegenkraft eingestellt ist. Es versteht sich von selbst, dass dieser Vorgang beliebig oft, sobald der Bedarf hierfür besteht, wiederholt werden kann.

Mit der vorgeschlagenen rein elektromotorisch betätigbaren Spanneinrichtung werden rasche und zuverlässige Spannvorgänge ermöglicht. Gleichzeitig können Korrekturen der vom Federkraftspeicher bereitgestellten Gegenkraft auch während des Betriebs der Werkzeugmaschine vorgenommen werden.

### Bezugszeichenliste

- 11: Zug- und/oder Druckstange
- 12: Elektromotor
- 13: Getriebemittel
- 14: Kopplungseinrichtung
- 15: Motorseitiges Teilelement
- 16: Getriebeseitiges Teilelement
- 17: Elektromechanischer Verstellantrieb
- 18: Elektromotoren
- 20: Zugfedern
- 22: Exzenter
- 24: Federkraftspeicher
- 25: Spiralfedern
- 26: Gasdruckfedern
- 27, 28: Zahnräder
- 31: Planetenrollengewindetrieb
- 32: (außenliegender) Innengewindekörper
- 33: (innenliegender) Außengewindekörper
- 34, 35: Rollkörper
- 37: Außengewinde (Rollkörper)
- 38: Sensoreinrichtungen
- 39: Außengehäuse
- 40: axiale Ausnehmung
- 41: Spannzylinder
- 42: Sensoreinrichtung
- 43: Flansch
- 44: (lichter) Innenquerschnitt
- 45: Stator
- 46: Rotor
- 47: Anschlag
- 48: Innengehäuse (Spannzylinder)
- 49: Riegelelement
- 50: Führungszapfen
- 51: Führungsausnehmungen
- 52: Außenelement
- 53: Lager
- 54: Lager
- 55: Lager
- 56: Welle (Elektromotor)
- 57: Platte
- 58: Exzenterkurve
- 59: Öffnungen
- 60: Mitnahmeabschnitt
- 61: Ringelement
- 62: Steuerungseinrichtung
- 63: Werkzeugmaschinensteuerung
- 64: Anschlagfläche
- 65: Sensor (Umdrehung Elektromotor)
- 66: Sensor (Umdrehung Zug- und/oder Druckstange)
- 67: Führungen (Innengewindekörper)

## Patentansprüche

1. Spanneinrichtung für Werkzeugmaschinen, insbesondere Dreh- oder Fräsmaschinen, die mit einem Kraftspannfutter zur Festlegung eines Werkzeugs oder Werkstücks versehen sind, dessen Spannbacken mittels der Spanneinrichtung über eine axial verstellbare, im Betrieb der Werkzeugmaschine mitumlaufende Zug- und/oder Druckstange betätigbar sind,
wobei die Spanneinrichtung umfasst:
- eine axial verstellbare Zug- und/oder Druckstange (11),
- einen Elektromotor (12), über den die axiale Verstellung der Zug- und/oder Druckstange (11) erfolgt, wobei der Elektromotor (12) zur Zug- und/oder Druckstange (11) koaxial angeordnet ist, jedoch im Betrieb der Werkzeugmaschine nicht mit der Zug- und/oder Druckstange (11) umläuft,
- Getriebemittel (13), die mit der Zug- und/oder Druckstange (11) mit umlaufen, und
- eine Kopplungseinrichtung (14), um den Elektromotor (12) bedarfsweise drehmomentschlüssig mit den Getriebemitteln (13) zu koppeln und damit eine Axialkraft auf die Zug- und/oder Druckstange (11) aufzubringen,
wobei die Spanneinrichtung einen Federkraftspeicher (24) aufweist, der einer axialen Verschiebung der Zug- und/oder Druckstange (11) entgegen der Schließbewegung der Spannbacken eine ausreichende Gegenkraft entgegensetzt, etwa um Fliehkräfte der Spannbacken und/oder Bearbeitungskräfte auszugleichen, **dadurch gekennzeichnet dass** der Federkraftspeicher (24) mehrere parallel zueinander wirksame Federelemente (25, 26) unterschiedlicher Bauart umfasst, nämlich eine vorbestimmte Anzahl von Spiralfedern (25) sowie eine vorbestimmte Anzahl von Gasdruckfedern (26).

2. Spanneinrichtung nach Anspruch 1, **dadurch gekennzeichnet, dass** der Elektromotor (12) eine axiale Ausnehmung (40) aufweist und vorzugsweise die Zug- und/oder Druckstange diese Ausnehmung (40) ganz oder teilweise durchdringt.

3. Spanneinrichtung nach Anspruch 1 oder 2, **dadurch gekennzeichnet, dass** die Kopplungseinrichtung (14) ein motorseitiges Teilelement (15) und ein getriebeseitiges Teilelement (16) umfasst, die von einer ersten, entkoppelten Position in eine zweite gekoppelte Position und vice versa überführt werden können, wobei die Kopplungseinrichtung (14) einen elektromechanischen Verstellantrieb (17) umfasst.

4. Spanneinrichtung nach einem der Ansprüche 1 bis 3, **dadurch gekennzeichnet, dass** der Verstellantrieb (17) derart in die Spanneinrichtung integriert ist, dass er in radialer Richtung ausgehend von der durch die Zug- und/oder Druckstange (11) definierten Achse A nicht über ein Elektromotor (12) und Getriebemittel (13) aufnehmendes Außengehäuse (39) vorsteht.

5. Spanneinrichtung nach Anspruch 3 oder 4, **dadurch gekennzeichnet, dass** die Kopplungseinrichtung (14) zwei miteinander in Eingriff bringbare Zahnräder (27, 28) umfasst, wobei ein antriebsseitiges Zahnrad (27) Teil des motorseitigen Teilelements (15) ist oder das motorseitige Teilelement (15) bildet und wobei ein abtriebseitiges Zahnrad (28) Teil des getriebeseitigen Teilelements (16) ist oder das getriebeseitige Teilelement (16) bildet.

6. Spanneinrichtung nach Anspruch 5, **dadurch gekennzeichnet, dass** das antriebsseitige Zahnrad (27) und/oder das abtriebsseitige Zahnrad (28) koaxial zur Zug- und/oder Druckstange (11) umlaufend gelagert sind.

7. Spanneinrichtung nach Anspruch 5 oder 6, **dadurch gekennzeichnet, dass** die Zahnpaarungen der Zahnräder (27, 28) seitlich oder stirnseitig ausgebildet sind.

8. Spanneinrichtung nach einem der Ansprüche 1 bis 7, **dadurch gekennzeichnet, dass** die mit der Zug- und/oder Druckstange (11) mitumlaufenden Getriebemittel (13) einen Planetenrollengewindetrieb (31) umfassen mit
- einem außenliegenden Innengewindekörper (32),
- einem innenliegenden Außengewindekörper (33), der der mit der Zug- und/oder Druckstange (11) fest verbunden oder einstückig mit ihr ausgebildet ist sowie
- zwischen Außengewindekörper (33) und Innengewindekörper (32) angeordnete Rollkörper (34, 35) mit einer zylindrischen Grundform und einer auf die Gewinde von Innengewindekörper (32) und Außengewindekörper (33) abgestimmtem Außengewinde (37).

9. Spanneinrichtung nach einem der Ansprüche 1 bis 8, **dadurch gekennzeichnet, dass** Elektromotor (12), Getriebemittel (13) und Kopplungseinrichtung (14) alle koaxial um die Zug- und/oder Druckstange (11), jeweils nebeneinanderliegend angeordnet sind.

10. Spanneinrichtung nach Anspruch 9, **dadurch gekennzeichnet, dass** die Getriebemittel (13) an der dem Kraftspannfutter zugewandten Seite oder der Elektromotor (12) an der dem Kraftspannfutter abgewandten Seite und die Kopplungseinrichtung (14) dazwischenliegend an der Zug- und/oder Druckstange (11) angeordnet sind.

11. Spanneinrichtung nach einem der Ansprüche 1 bis 10, **dadurch gekennzeichnet, dass** der elektromechanische Verstellantrieb (17) zwei Elektromotoren (18) umfasst, wobei über jeweils einen vom Elektromotor (18) angetriebenen Exzenter ein motorseitiges Teilelement (15) und getriebeseitiges Teilelement (16) voneinander wegbewegt und/oder aneinander angenähert werden können.

12. Spanneinrichtung nach Anspruch 11, **dadurch gekennzeichnet, dass** eine zur Verstellbewegung des oder der Exzenter (22) gegenläufige Bewegung durch ein oder mehrere Zugfedern (20) bzw. ein oder mehrere Druckfedern bewirkt wird.

13. Spanneinrichtung nach Anspruch 11 oder 12, **dadurch gekennzeichnet, dass** der oder die Exzenter (22) über den oder die Elektromotoren (18) in eine Übertotposition bringbar sind, so dass eine Selbstarretierung gegeben ist.

14. Spanneinrichtung nach Anspruch 1, **dadurch gekennzeichnet, dass** Sensoreinrichtungen (38) vorgesehen sind, die den Federweg, also die aktuelle Kompression (bzw. Dilatation) im Federkraftspeicher (24) erfassen, um daraus auf die jeweils gegebene Gegenkraft schließen zu können.

## Claims

1. A clamping device for machine tools, in particular turning or milling machines provided with a power chuck for fixing a tool or work piece, the clamping jaws of which can be operated by means of the clamping device via an axially adjustable pull and/or pressure rod which is co-rotational during operation of the machine tool,
wherein the clamping device comprises:
- an axially adjustable pull and/or pressure rod (11),
- an electric motor (12) via which the axial adjustment of the pull and/or pressure rod (11) is performed, wherein the electric motor (12) is arranged to be coaxial to the pull and/or pressure rod (11) but does not co-rotate with the pull and/or pressure rod (11) during operation of the machine tool,
- gear means (13) co-rotating with the pull and/or pressure rod (11), and
- a coupling device (14) to couple the electric motor (12) as needed in a torque-fit manner to the gear means (13) and thus to apply an axial force upon the pull and/or pressure rod (11),
wherein the clamping device features a spring force storage unit (24) which sets a sufficient counterforce against an axial displacement of the pull and/or pressure rod (11) against the closing movement of the clamping jaws such as to counterbalance centrifugal forces of the clamping jaws and/or machining forces,
**characterized in that**
the spring force storage unit (24) comprises a plurality of spring elements (25, 26) of different design which are mutually effective in parallel, that is a predefined number of spiral springs (25) and a predefined number of gas pressure springs (26).

2. The clamping device according to claim 1, **characterized in that** the electric motor (12) features an axial recess (40) and the pull and/or pressure rod (11) preferably penetrates this recess (40) entirely or in part.

3. The clamping device according to claim 1 or 2, **characterized in that** the coupling device (14) comprises a sub-element (15) on the motor side and a sub-element (16) on the gear side which can be transferred from a first, decoupled position into a second, coupled position and vice versa, wherein the coupling device (14) comprises an electromechanical adjustment drive (17).

4. The clamping device according to anyone of claims 1 to 3, **characterized in that** the adjustment drive (17) is integrated in the clamping device such as not to protrude, in the radial direction starting from the axis A defined by the pull and/or pressure rod (11), beyond an external casing (39) accommodating the electric motor (12) and the gear means (13).

5. The clamping device according to claim 3 or 4, **characterized in that** the coupling device (14) comprises two gears (27, 28) that are mutually engageable, wherein a gear (27) on the drive side is a part of the sub-element (15) on the motor side or forms the sub-element (15) on the motor side, and wherein a gear (28) on the output side is a part of the sub-element (16) on the drive side or forms the sub-element (16) on the gear side.

6. The clamping device according to claim 5, **characterized in that** the gear (27) on the drive side and/or the gear (28) on the output side are mounted coaxially to the pull and/or pressure rod (11) in a revolving manner.

7. The clamping device according to claim 5 or 6, **characterized in that** the teeth combinations of the gears (27, 28) are formed to be lateral or frontal.

8. The clamping device according to anyone of claims 1 to 7, **characterized in that** the gear means (13) co-rotating with the pull and/or pressure rod (11) comprise a planetary roller screw drive (31) having
- an exterior internal thread body (32),
- an interior external thread body (33) which is fixedly connected to the pull and/or pressure rod (11) or is integrally formed with it, and
- roller bodies (34, 35) arranged between the external thread body (33) and internal thread body (32) and having a cylindrical base shape, and an external thread (37) adapted to the threads of the internal thread body (32) and external thread body (33).

9. The clamping device according to anyone of claims 1 to 8, **characterized in that** the electric motor (12), the gear means (13) and the coupling device (14) are all arranged coaxially about the pull and/or pressure rod (11) each next to one another.

10. The clamping device according to claim 9, **characterized in that**, at the pull and/or pressure rod (11), the gear means (13) are arranged on the side facing the power chuck, or the electric motor (12) is arranged on the side facing away from the power chuck, and the coupling device (14) is interposed.

11. The clamping device according to anyone of claims 1 to 10, **characterized in that** the electromechanical adjustment drive (17) comprises two electric motors (18), wherein via an eccentric in each case driven by the electric motor (18), a sub-element (15) on the motor side and a sub-element (16) on the drive side may be moved away from or approached to one another.

12. The clamping device according to claim 11, **characterized in that** a movement opposite to the adjustment movement of the eccentric(s) (22) is caused by one or more tension springs (20) or one or more compression springs.

13. The clamping device according to claim 11 or 12, **characterized in that** the eccentric(s) (22) may be brought beyond a dead position by means of the electric motor(s) (18) so that self-locking is given.

14. The clamping device according to claim 1, **characterized in that** sensor devices (38) are provided detecting the spring path, i.e. the current compression (or dilatation) in the spring force storage unit (24) in order to be able to derive the respective given counterforce therefrom.

## Revendications

1. Dispositif de serrage pour machines-outils, en particulier machines de tournage ou de fraisage, qui sont équipées d'un mandrin de serrage mécanique pour la fixation d'un outil ou d'une pièce à usiner, dont les mâchoires de serrage sont actionnables moyennant le dispositif de serrage via une tige de traction et/ou de pression réglable axialement et entraînée en rotation lors du fonctionnement de la machine-outil,
sachant que le dispositif de serrage comprend :
- une tige de traction et/ou de pression (11) réglable axialement,
- un moteur électrique (12) via lequel le réglage axial de la tige de traction et/ou de pression (11) est effectué, sachant que le moteur électrique (12) est disposé coaxialement par rapport à la tige de traction et/ou de pression (11), mais n'est pas en co-rotation avec la tige de traction et/ou de pression (11) lors du fonctionnement de la machine-outil,
- des engrenages (13) qui sont en co-rotation avec la tige de traction et/ou de pression (11), et
- un dispositif d'accouplement (14) pour accoupler le moteur électrique (12) avec les engrenages (13) selon les besoins par liaison de transmission de couple et pour appliquer ainsi une force axiale à la tige de traction et/ou de pression (11),
sachant que le dispositif de serrage présente un accumulateur de force de ressort (24) qui oppose à un déplacement axial de la tige de traction et/ou de pression (11) une force antagoniste suffisante opposée au mouvement de fermeture des mâchoires de serrage, par exemple pour compenser des forces centrifuges des mâchoires de serrage et/ou des forces d'usinage,
**caractérisé en ce que** l'accumulateur de force de ressort (24) comprend plusieurs éléments de ressort (25, 26) de type de construction différent agissant parallèlement les uns aux autres, à savoir un nombre prédéterminé de ressorts hélicoïdaux (25) ainsi qu'un nombre prédéterminé de ressorts pneumatiques (26).

2. Dispositif de serrage selon la revendication 1, **caractérisé en ce que** le moteur électrique (12) présente une cavité axiale (40) et de préférence la tige de traction et/ou de pression traverse totalement ou partiellement cette cavité (40).

3. Dispositif de serrage selon la revendication 1 ou 2, **caractérisé en ce que** le dispositif d'accouplement (14) comprend un élément partiel (15) côté moteur et un élément partiel (16) côté engrenages qui peuvent être transférés d'une première position découplée à une deuxième position accouplée et inversement, sachant que le dispositif d'accouplement (14) comprend un entraînement de réglage (17) électromécanique.

4. Dispositif de serrage selon l'une des revendications 1 à 3, **caractérisé en ce que** l'entraînement de réglage (17) est intégré dans le dispositif de serrage de telle façon qu'il ne dépasse pas d'un carter extérieur logeant le moteur électrique (12) et les engrenages (13) en direction radiale en partant de l'axe A défini par la tige de traction et/ou de pression (11).

5. Dispositif de serrage selon la revendication 3 ou 4, **caractérisé en ce que** le dispositif d'accouplement (14) comprend deux roues dentées (27, 28) pouvant s'engrener l'une avec l'autre, sachant qu'une roue dentée (27) côté menant fait partie de l'élément partiel (15) côté moteur ou forme l'élément partiel (15) côté moteur et sachant qu'une roue dentée (28) côté mené fait partie de l'élément partiel (16) côté engrenages ou forme l'élément partiel (16) côté engrenages.

6. Dispositif de serrage selon la revendication 5, **caractérisé en ce que** la roue dentée (27) côté menant et/ou la roue dentée (28) côté mené sont logées en rotation coaxialement par rapport à la tige de traction et/ou de pression (11).

7. Dispositif de serrage selon la revendication 5 ou 6, **caractérisé en ce que** les appariements de dents des roues dentées (27, 28) sont constituées latéralement ou frontalement.

8. Dispositif de serrage selon l'une des revendications 1 à 7, **caractérisé en ce que** les engrenages (13) en co-rotation avec la tige de traction et/ou de pression (11) comprennent un mécanisme à vis à rouleaux planétaires avec
- un corps à filetage intérieur (32) situé à l'extérieur,
- un corps à filetage extérieur (33) situé à l'intérieur qui est fermement relié à la tige de traction et/ou de pression (11) ou est constitué d'une seule pièce avec celle-ci ainsi que
- des corps de rouleau (34, 35) disposés entre le corps à filetage extérieur (33) et le corps à filetage intérieur (32), présentant une forme de base cylindrique et un filetage extérieur (37) adapté aux filetages du corps à filetage intérieur (32) et du corps à filetage extérieur (33).

9. Dispositif de serrage selon l'une des revendications 1 à 8, caractérisé en ce le moteur électrique (12), les engrenages (13) et le dispositif d'accouplement (14) sont tous disposés coaxialement autour de la tige de traction et/ou de pression (11), respectivement les uns à côtés des autres.

10. Dispositif de serrage selon la revendication 9, **caractérisé en ce que** les engrenages (13) sont disposés du côté tourné vers le mandrin de serrage mécanique ou le moteur électrique (12) est disposé du côté opposé au mandrin de serrage mécanique et le dispositif d'accouplement (14) est disposé entre ceux-ci au niveau de la tige de traction et/ou de pression (11).

11. Dispositif de serrage selon l'une des revendications 1 à 10, **caractérisé en ce que** l'entraînement de réglage (17) électromécanique comprend deux moteurs électriques (18), sachant qu'un élément partiel (15) côté moteur et un élément partiel (16) côté engrenages sont éloignés et/ou rapprochés l'un de l'autre via respectivement un excentrique entraîné par le moteur électrique (18).

12. Dispositif de serrage selon la revendication 11, **caractérisé en ce qu'**un mouvement contraire au mouvement de réglage du ou des excentriques (22) est engendré par un ou plusieurs ressorts de traction (20) et/ou un ou plusieurs ressorts de pression.

13. Dispositif de serrage selon la revendication 11 ou 12, **caractérisé en ce que** le ou les excentriques (22) peuvent être mis dans une position au-delà du point mort via le ou les moteurs électriques (18) de sorte qu'un autoblocage soit donné.

14. Dispositif de serrage selon la revendication 1, **caractérisé en ce que** des dispositifs de capteur (38) sont prévus, lesquels captent la course de ressort, soit la compression (ou dilatation) actuelle dans l'accumulateur de force de ressort (24) pour pouvoir en déduire la force antagoniste donnée respectivement.
